# EUROPÄISCHE PATENTSCHRIFT

(11) **EP 1 295 984 B1**
(45) Veröffentlichungstag und Bekanntmachung des Hinweises auf die Patenterteilung: **17.02.2010**
(21) Anmeldenummer: 02015902.6
(22) Anmeldetag: 17.07.2002
(51) Int. Cl.: D06Q 1/10, B44C 1/10, B44F 1/00

(54) **Einrichtung zum Aufbringen von Glaselementen auf eine Unterlage**
Device for fixing glass elements onto a substrate
Dispositif pour la fixation d'éléments en verre sur un support

(30) Priorität: 08.08.2001 AT 6252001
(43) Veröffentlichungstag der Anmeldung: 26.03.2003
(73) Patentinhaber: D. Swarovski & Co., 6112 Wattens (AT)
(72) Erfinder: Messner, Peter, 6111 Volders (AT); Graf, Johannes, 6112 Wattens (AT); Gander, Matthias, 6500 Landeck (AT); Oefner, Herbert, 6112 Wattens (AT); Hofer, Bernhard, 6165 Telfes (AT)
(74) Vertreter: Torggler, Paul Norbert

(56) Entgegenhaltungen:
- WO-A-00/58548
- US-A- 5 620 775

## Beschreibung

Die Erfindung bezieht sich auf eine Einrichtung zum Aufbringen von Glaselementen mit unverspiegelter Rückseite auf eine insbesondere textile Unterlage, wobei der überwiegende Teil der Glaselemente die Form von Kugeln hat, mindestens 5 % der Glaselemente ebene Begrenzungsflächen aufweisen und die Glaselemente flächenbildend an der Vorderseite einer Folie angebracht sind.

Soll mit facettierten Steinen ein Muster gebildet werden, ist es üblich, die Steine in Form dieses Musters an der Vorderseite mit einer Trägerfolie zu verbinden. Derartige Einrichtungen zum Aufbringen von Mustern, insbesondere aus geschliffenen Glassteinchen, auf Textilien sind seit langem bekannt (vgl. AT 360 627 B). Wesentlich für ihren Herstellungsprozeß ist die Beschichtung der dekorativen Elemente mit einem Schmelzkleber. Zur Beschichtung werden die Elemente auf einem Trägerband befestigt und mittels einer Beschichtungswalze gemeinsam mit flüssigem Schmelzkleber beschichtet. Nach dem Abkühlen des Klebers sind die Steine einzeln manipulierbar und können musterförmig mit einer Trägerfolie verbunden werden. Nach dem Abziehen einer beim Transport die Klebeflächen abdeckenden Schutzfolie wird die Trägerfolie samt den daran befestigten Elementen so auf die Unterlage gelegt, daß die mit dem Kleber versehene Rückseite der Elemente an der Unterlage anliegt. Durch die Anwendung von Hitze und Druck, üblicherweise durch Aufbügeln, wird der Kleber aktiviert und mit der Unterlage verbunden.

Die verwendeten Glaselemente sind üblicherweise an ihrer Rückseite verspiegelt, beispielsweise durch Bedampfen mit einer Aluminiumschicht, welche durch eine Schutzschicht aus Chrom abgedeckt sein kann. Zwischen der Verspiegelung und dem an sich durchsichtigen Schmelzkleber befindet sich ein undurchsichtiger Haftgrund zur Haftvermittlung zwischen dem Schmelzkleber und der Schutzschicht. In AT 003 268 U1 ist aber bereits beschrieben, daß bei Verwendung von Glaselementen mit unverspiegelter Rückseite Kombinationseffekte zwischen der Farbe des textilen Untergrundes und den Brechungseigenschaften bzw. der Farbe der Glaselemente erzielt werden können.

Aufgabe der Erfindung ist es, unter Beibehaltung dieses Vorteils ganze Flächenbereiche mit an der Rückseite unverspiegelten Glaselementen zu belegen. In Durchführung dieses Gedankens ist es sinnvoll, die Glaselemente nicht mehr einzeln mit einem Haftkleber zu versehen, sondern die Befestigung der Steine auf der Unterlage durch eine Folie zu vermitteln, an deren Vorderseite die Steine eingedrückt sind.

Aus WO 97/16754 (Minnesota Mining and Manufacturing Company) ist eine Folie bekannt geworden, welche mit einer Mischung aus Glaskugeln und Glassplittern belegt ist. Die Gegenwart der Glassplitter ist dabei eine an sich unerwünschte Folge des Herstellungsprozesses. Auch wenn den Splittern ein positiver Effekt auf das Erscheinungsbild der Folie zugeschrieben wird, wird andererseits doch anerkannt, daß sie die mechanischen Eigenschaften des Produktes verschlechtern, insbesondere wenn sie weiter über die Oberfläche ragen als die Kugeln. Der Erfindung liegt demgegenüber die Aufgabe zugrunde, den durch spiegelnde ebene Flächen erzeugten Glitzereffekt ohne Beeinträchtigung der mechanischen Homogenität der Produktoberfläche zu erzielen. Insbesondere wird die durch irreguläre Splitter verursachte Erhöhung des Reibungskoeffizienten vermieden, wenn vorgesehen wird, daß wenigstens ein Teil der Glaselemente aus angeschliffenen Kugeln besteht.

Im Gegensatz zu Glassplittern verändern mit Facetten versehene Kugeln die Oberflächeneigenschaften des Produktes nur geringfügig gegenüber einer lediglich mit Kugeln belegten Folie. Dies gilt insbesondere dann, wenn vorgesehen wird, daß weniger als 25% der Glaselemente aus angeschliffenen Kugeln bestehen.

Einzelheiten der Erfindung werden anhand der Zeichnung diskutiert, in welcher
Fig. 1 eine Seitenansicht der neuerungsgemäßen Einrichtung darstellt,
Fig. 2 die vergrößerte Seitenansicht einer mit einer 8-facettigen Spitze versehenen Kugel, und Fig. 3 die entsprechende Draufsicht zu Fig. 2.

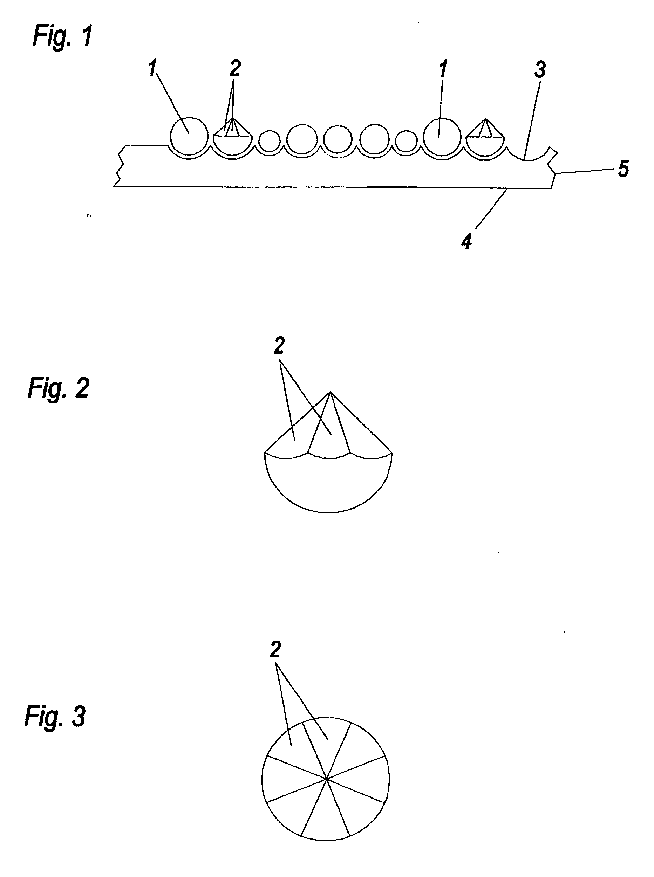

Das in Fig. 1 dargestellte Produkt besteht im wesentlichen aus einer Folie 5 aus Kunststoff, in deren Vorderseite 3 Schicht 3 Glaselemente eingesetzt sind. Diese belegen Teilflächen der Vorderseite möglichst vollständig. Es handelt sich einerseits um Glaskugeln 1 (Ballotini) mit einem Durchmesser zwischen 0,15 und vorzugsweise nicht über 1,2 mm. Bei kleinerem Durchmesser sind die einzelnen Elemente aus üblicher Entfernung nicht mehr hinreichend erkennbar, bei größerem Durchmesser ist die mechanische Belastbarkeit der Verbindung zwischen den Elementen und der Folie nicht mehr hoch genug.

Die Kugeln 1 und die mit Facetten 2 versehenen Glaselemente werden üblicherweise erhitzt und bringen dadurch die Vorderseite 3 der Folie 5 lokal zum Schmelzen, sodaß sie bis zur Hälfte von der Folie aufgenommen werden, welche mit einem Schmelzkleber beschichtet sein kann.

Mindestens 5 %, aus Kostengründen aber möglichst nicht mehr als 20% der Glaskugeln sind mit Facetten 2 versehen. Diese Facetten sind notwendig, um einen edelsteinartigen Glitzereffekt zu erzielen. Da die facettierten Glaselemente durch Anschleifen von Kugeln 1 hergestellt werden, erscheinen sie nicht als Fremdkörper. Ein derartiges Element ist aus Fig. 2 und 3 zu entnehmen.

Das Aufbringen des Produktes nach Fig. 1 auf eine textile Unterlage kann durch Aufbügeln erfolgen, wozu die Rückseite 4 der Folie 5 mit einem Schmelzkleber beschichtet sein kann. Auch ein Aufnähen wäre möglich.

Um die Farbe des Untergrundes durch die Applikation zwar zu modifizieren, aber doch als solche zur Geltung zu bringen, ist es sinnvoll, wenn die Folie 5 aus klarem und durchsichtigem Material besteht. Falls die Folie dehnbar sein soll, ist es zweckmäßig, dafür Polyurethan zu verwenden. Besondere Farbeffekte können erzielt werden, wenn die Glaselemente in bekannter Weise bedampft sind und dadurch im Auflicht farbig erscheinen.

## Patentansprüche

1. Einrichtung zum Aufbringen von Glaselementen mit unverspiegelter Rückseite auf eine insbesondere textile Unterlage, wobei der überwiegende Teil der Glaselemente die Form von Kugeln hat, mindestens 5 % der Glaselemente ebene Begrenzungsflächen aufweisen und die Glaselemente flächenbildend an der Vorderseite einer Folie angebracht sind, **dadurch gekennzeichnet, daß** wenigstens ein Teil der Glaselemente aus angeschliffenen Kugeln besteht.

2. Einrichtung nach Anspruch 1, **dadurch gekennzeichnet, daß** weniger als 25% der Glaselemente aus angeschliffenen Kugeln bestehen.

3. Einrichtung nach Anspruch 1, **dadurch gekennzeichnet, daß** die Größe der Kugeln zwischen 0,15 und 1,5 mm liegt.

4. Einrichtung nach Anspruch 1, **dadurch gekennzeichnet, daß** die Kugeln in Draufsicht farbig sind.

5. Einrichtung nach Anspruch 4, **dadurch gekennzeichnet, daß** die Kugeln mit interferenzerzeugenden oder absorbierenden Schichten versehen sind.

## Claims

1. Apparatus for applying glass elements with a non-mirrored rear side to an in particular textile substrate, wherein the predominant proportion of the glass elements is in the form of balls, at least 5% of the glass elements comprise flat boundary surfaces, and the glass elements are applied to the front side of a foil to form a surface, **characterised in that** at least a portion of the glass elements comprises balls provided with facets.

2. Apparatus according to claim 1 **characterised in that** fewer than 25% of the glass elements are facetted balls.

3. Apparatus according to claim 1 **characterised in that** the size of the balls is between 0.15 and 1.5 mm.

4. Apparatus according to claim 1 **characterised in that** the balls are coloured in plan view.

5. Apparatus according to claim 4 **characterised in that** the balls are provided with interference-producing or absorbent layers.

## Revendications

1. Dispositif pour la fixation d'éléments en verre avec une face arrière non argentée sur un substrat, en particulier textile, sachant que la partie prépondérante des éléments en verre a la forme de sphères, qu'au moins 5 % des éléments en verre présentent des surfaces limites planes et que les éléments en verre sont appliqués sur la face avant d'un film pour y former une surface, **caractérisé en ce qu'**au moins une partie des éléments en verre consiste en des sphères meulées.

2. Dispositif selon la revendication 1,
**caractérisé en ce que** moins de 25 % des éléments en verre consistent en des sphères meulées.

3. Dispositif selon la revendication 1,
**caractérisé en ce que** la taille des sphères est comprise entre 0,15 et 1,5 mm.

4. Dispositif selon la revendication 1,
**caractérisé en ce qu'**en vue de dessus, les sphères sont colorées.

5. Dispositif selon la revendication 4,
**caractérisé en ce que** les sphères sont dotées de couches provoquant des interférences ou de couches absorbantes.
